# EUROPEAN PATENT APPLICATION

(11) **EP 4 693 060 A1**
(43) Date of publication of application: **11.02.2026**
(21) Application number: 24814359.6
(22) Date of filing: 24.05.2024
(51) Int. Cl.: G06F 15/78

(54) **PROCESSING CHIP, DESIGN METHOD, AND ELECTRONIC DEVICE**

(30) Priority: 30.05.2023 CN 202310626996
(71) Applicant: Huawei Technologies Co., Ltd., Shenzhen, Guangdong 518129 (CN)
(72) Inventor: MA, De, Hangzhou, Zhejiang 310058 (CN); JIN, Xiaofei, Hangzhou, Zhejiang 310058 (CN); WANG, Kanwen, Shenzhen, Guangdong 518129 (CN); JIANG, Lei, Shenzhen, Guangdong 518129 (CN); LIU, Tao, Shenzhen, Guangdong 518129 (CN); LIAO, Jianxing, Shenzhen, Guangdong 518129 (CN); CHENG, Jie, Shenzhen, Guangdong 518129 (CN)
(74) Representative: Epping - Hermann - Fischer
(86) International application number: PCT/CN2024/095332
(87) International publication number: WO 2024/245162

(57) **Abstract**

Embodiments of this application provide a processing chip, a design method, and an electronic device. The processing chip includes a first sub-circuit (10), an asynchronous clock interface circuit (20C), and a second sub-circuit (30). The asynchronous clock interface circuit (20C) includes a first beat conversion circuit (21C), a first trigger circuit (23C), and a second beat conversion circuit (22C). A first signal end (X1) of the first sub-circuit (10) is coupled to a trigger input end (D1) of the first trigger circuit (23C). A trigger output end (Q1) of the first trigger circuit (23C) is separately coupled to an input end of the first beat conversion circuit (21C) and an input end of the second beat conversion circuit (22C). An output end of the first beat conversion circuit (21C) is coupled to a third signal end (X3) of the first sub-circuit (10). An output end of the second beat conversion circuit (22C) is coupled to a second signal end (X2) of the second sub-circuit (30). In embodiments of this application, an exchange delay of an asynchronous clock integrated circuit-based processing chip during asynchronous exchange of a control signal is reduced.

## Description

This application claims priority to Chinese Patent Application No. 202310626996.6, filed with the China National Intellectual Property Administration on May 30, 2023 and entitled "PROCESSING CHIP, DESIGN METHOD, AND ELECTRONIC DEVICE", which is incorporated herein by reference in its entirety.

### TECHNICAL FIELD

This application relates to the field of chip design technologies, and in particular, to a processing chip, a design method, and an electronic device.

### BACKGROUND

A global synchronization clock signal is usually used in an integrated circuit design of a chip. With development of integrated circuits, a scale of the integrated circuit gradually increases. A global clock integrated circuit using the global synchronization clock signal has problems such as high power consumption and complex communication exchange. This limits expansion of the circuit scale. To satisfy research and expansion of a larger-scale integrated circuit, an asynchronous clock signal is gradually used in a very large scale integrated circuit. To be specific, two sub-circuits in a very large scale integrated circuit are respectively based on different clock signals. However, how to asynchronously exchange control signals between the two asynchronous sub-circuits is a difficult problem.

An exchange method for an asynchronous clock integrated circuit is: disposing an asynchronous clock interface circuit between a first sub-circuit and a second sub-circuit that are asynchronous to each other. An asynchronous clock interface includes a send beat conversion circuit and a receive beat conversion circuit. That the first sub-circuit implements control signal exchange with the second sub-circuit through the send beat conversion circuit and the receive beat conversion circuit based on a handshake mechanism is specifically as follows: The first sub-circuit sends a first handshake request signal to the receive beat conversion circuit, and the receive beat conversion circuit beats the first handshake request signal that is in a same clock domain as the first sub-circuit, so that the first handshake request signal is conversed to a second handshake request signal that is in a same clock domain as the second sub-circuit, and the second handshake request signal is sent to the second sub-circuit; the second sub-circuit sends a first handshake feedback signal to the send beat conversion circuit based on the second handshake request signal; and the send beat conversion circuit beats the first handshake feedback signal that is in a same clock domain as the second sub-circuit, so that the first handshake feedback signal is conversed to a second handshake feedback signal that is in a same clock domain as the first sub-circuit, and the second handshake feedback signal is sent to the first sub-circuit. In this way, the control signal exchange between the first sub-circuit and the second sub-circuit is completed. However, in this implementation, each handshake exchange of a control signal needs to separately undergo beating of the send beat conversion circuit and beating of the receive beat conversion circuit, and beating operations of both the send beat conversion circuit and the receive beat conversion circuit cause a specific delay. Therefore, performance of an asynchronous clock integrated circuit-based chip is affected.

### SUMMARY

Embodiments of this application provide a processing chip, a design method, and an electronic device, to reduce a delay of asynchronous control signal exchange performed by an asynchronous clock integrated circuit-based processing chip, and improve performance of the processing chip. To achieve the foregoing objectives, the following technical solutions are used in embodiments of this application.

According to a first aspect, a processing chip is provided. The processing chip includes a first sub-circuit, an asynchronous clock interface circuit, and a second sub-circuit. The asynchronous clock interface circuit includes a first beat conversion circuit, a first trigger circuit, and a second beat conversion circuit. A first signal end of the first sub-circuit is coupled to a trigger input end of the first trigger circuit. A trigger output end of the first trigger circuit is separately coupled to an input end of the first beat conversion circuit and an input end of the second beat conversion circuit. An output end of the first beat conversion circuit is coupled to a third signal end of the first sub-circuit. An output end of the second beat conversion circuit is coupled to a second signal end of the second sub-circuit. A first clock output end of the first sub-circuit is coupled to a first clock end of the first beat conversion circuit. A second clock output end of the second sub-circuit is coupled to a second clock end of the second beat conversion circuit.

In this embodiment of this application, the first sub-circuit and the second sub-circuit are two sub-circuits based on different clock signals. When control signal exchange is performed between the two sub-circuits, beating need to be performed on control signals that enter different clock domains.

When the first signal end of the first sub-circuit sends a first handshake request signal to the trigger input end of the first trigger circuit, the first handshake request signal is used for triggering the trigger output end of the first trigger circuit to output a second handshake request signal. The trigger output end of the first trigger circuit simultaneously outputs the second handshake request signal to the first beat conversion circuit coupled to the first sub-circuit and the second beat conversion circuit coupled to the second sub-circuit. The two beat conversion circuits simultaneously start to beat the second handshake request signal. The first beat conversion circuit beats the second handshake request signal to obtain a second handshake feedback signal, and outputs the second handshake feedback signal to the third signal end of the first sub-circuit. The second beat conversion circuit beats the second handshake request signal to obtain a second handshake request signal that is in a same clock domain as the second sub-circuit, and outputs the second handshake request signal to the second signal end of the second sub-circuit, so that the control signal exchange between the first sub-circuit and the second sub-circuit is completed. In this embodiment of this application, the first beat conversion circuit and the second beat conversion circuit simultaneously perform beating, to reduce a delay of the control signal exchange between the sub-circuits in two different clock domains in an asynchronous clock integrated circuit.

In a possible implementation, the asynchronous clock interface circuit further includes a clock generation circuit. A plurality of input ends of the clock generation circuit are respectively coupled to the first signal end of the first sub-circuit, the trigger output end of the first trigger circuit, and a fourth signal end of the second sub-circuit. An output end of the clock generation circuit is coupled to a first enable end of the first trigger circuit. In this embodiment of this application, a clock enable signal independent of the first sub-circuit and the second sub-circuit may be generated through the clock generation circuit. The clock enable signal is used for driving and controlling operation of the first trigger circuit. The clock generation circuit may generate the clock enable signal based on the control signal exchanged between the first sub-circuit and the second sub-circuit, and the signal output by the first trigger circuit.

In a possible implementation, the asynchronous clock interface circuit further includes a data cache. A first data output end of the first sub-circuit is coupled to a first data input end of the data cache. A second data output end of the data cache is coupled to a second data input end of the second sub-circuit. The output end of the clock generation circuit is further coupled to a second enable end of the data cache and the first enable end of the first trigger circuit. In this embodiment of this application, the first sub-circuit and the second sub-circuit may further implement asynchronous exchange of a data signal through the data cache. In addition, in this process, the clock enable signal output by the clock generation circuit may be used for controlling the data cache to input the data signal and/or output the data signal.

In a possible implementation, the asynchronous clock interface circuit further includes a first register and a second register. The first data output end of the first sub-circuit is coupled to an input end of the first register. An output end of the first register is coupled to the first data input end of the data cache. The clock output end of the first sub-circuit is further coupled to a third clock end of the first register. An input end of the second register is coupled to the second data output end of the data cache. An output end of the second register is coupled to the second data input end of the second sub-circuit. The clock output end of the second sub-circuit is further coupled to a fourth clock end of the second register. In this embodiment of this application, a transmitted data signal may be beat between the first sub-circuit and the data cache by using the first register, and A transmitted data signal may be beat between the data cache and the second sub-circuit by using the second register.

In a possible implementation, the asynchronous clock interface circuit further includes a voltage keeping circuit. The output end of the clock generation circuit is coupled to the second enable end of the data cache through the voltage keeping circuit. In this embodiment of this application, the data signal transmitted between the first sub-circuit and the second sub-circuit is a data signal of a plurality of bits. To ensure that the clock enable signal can drive the data cache to input the data signal that is of the plurality of bits and that is output by the first sub-circuit, and/or the data cache may output the data signal of the plurality of bits to the second sub-circuit, the voltage keeping circuit may be disposed to keep the clock generation circuit driving the data cache.

In a possible implementation, the asynchronous clock interface circuit further includes a pulse width delay circuit. The output end of the clock generation circuit is coupled to the first enable end of the first trigger circuit through the pulse width delay circuit. In this embodiment of this application, an effective pulse width of the clock enable signal may be adjusted through the pulse width delay circuit, to adapt to the operation of the first trigger circuit.

In a possible implementation, the pulse width delay circuit includes a delay circuit and a first AND gate. The output end of the clock generation circuit is coupled to a first input end of the first AND gate. The output end of the clock generation circuit is further coupled to a second input end of the first AND gate through the delay circuit. In this embodiment of this application, the clock generation circuit outputs a clock enable signal. The clock enable signal may be delayed through the delay circuit, to obtain a delayed clock enable signal. Then, a logical AND operation is performed on the delayed clock enable signal and the undelayed clock enable signal through the first AND gate, to obtain the clock enable signal obtained through adjustment of the effective pulse width. The first trigger circuit is driven by using the clock enable signal obtained through adjustment of the effective pulse width.

In a possible implementation, the clock generation circuit includes an XOR gate, an XNOR gate, and a second AND gate. The plurality of input ends of the clock generation circuit include a first input end of the XOR gate, a second input end of the XOR gate, a first input end of the XNOR gate, and a second input end of the XNOR gate. The first input end of the XOR gate is coupled to the first signal end of the first sub-circuit. The second input end of the XOR gate is coupled to the trigger output end of the first trigger circuit. The first input end of the XNOR gate is coupled to the fourth signal end of the second sub-circuit. The second input end of the XNOR gate is coupled to the trigger output end of the first trigger circuit. An output end of the XOR gate is coupled to a first input end of the second AND gate. An output end of the XNOR gate is coupled to a second input end of the second AND gate. An output end of the second AND gate is the output end of the clock generation circuit. In this embodiment of this application, the trigger output end of the first trigger circuit outputs the second handshake request signal. The first signal end of the first sub-circuit outputs the first handshake request signal. The second signal end of the second sub-circuit outputs a first handshake feedback signal. A logical XOR operation is performed, through the XOR gate, on the first handshake request signal output by the first signal end and the second handshake request signal output by the trigger output end. A logical XNOR operation is performed, through the XNOR gate, on the second handshake request signal output by the trigger output end and the first handshake feedback signal output by the fourth signal end of the second sub-circuit. A logical AND operation is performed on operation results of the logical XOR operation and the logical XNOR operation through the second AND gate, to obtain the clock enable signal.

In a possible implementation, the asynchronous clock interface circuit further includes a first level logic conversion circuit. The fourth signal end of the second sub-circuit is coupled to at least one of the plurality of input ends of the clock generation circuit through the first level logic conversion circuit. In this embodiment of this application, when the second sub-circuit and the clock generation circuit are triggered in different manners, the first level logic conversion circuit may be disposed to implement conversion of the triggering manner, for example, a level-triggered to edge-triggered conversion, or an edge-triggered to level-triggered conversion.

In a possible implementation, the asynchronous clock interface circuit further includes at least one of a second level logic conversion circuit, a third level logic conversion circuit, and a fourth level logic conversion circuit. The first signal end of the first sub-circuit is coupled to the trigger input end of the first trigger circuit through the second level logic conversion circuit. The output end of the first beat conversion circuit is coupled to the third signal end of the first sub-circuit through the third level logic conversion circuit. The output end of the second beat conversion circuit is coupled to the second signal end of the second sub-circuit through the fourth level logic conversion circuit. In this embodiment of this application, when the first sub-circuit and the first trigger circuit are triggered in different manners, the second level logic conversion circuit may be used for converting the triggering manner. When the first sub-circuit and the first beat conversion circuit are triggered in different manners, the third level logic conversion circuit may be used for converting the triggering manner. When the second sub-circuit and the second beat conversion circuit are triggered in different manners, the fourth level logic conversion circuit may be used for converting the triggering manner.

In a possible implementation, the first sub-circuit and/or the second sub-circuit are/is any one of a storage circuit, a logic control circuit, a routing interface circuit, and a neural network processing circuit. In this embodiment of this application, the processing chip may be a system on chip, a network on chip, or the like. The first sub-circuit and/or the second sub-circuit in the processing chip may be a sub-circuit in a very large scale integrated circuit such as a system on chip or a network on chip, for example, a storage circuit, a logic control circuit, a routing interface circuit, or a neural network processing circuit.

According to a second aspect, an embodiment of this application further provides a design method. The design method is used for designing the processing chip described in the second aspect. The design method includes: combining a first description file and a second description file to obtain a third description file, where the first description file is used for describing a logical function of a first chip; the first chip includes a plurality of sub-circuits; the plurality of sub-circuits are based on a same clock domain, or some or all of the plurality of sub-circuits are based on different clock domains; the second description file is used for describing a logical function of an asynchronous clock interface circuit; and the third description file is used for describing a logical function of the processing chip; performing timing constraint on the third description file; and obtaining a logic circuit structure of the processing chip based on a third description file on which timing constraint is performed.

In this embodiment of this application, in an EDA design related to chip manufacturing, the first description file is a description file based on an existing integrated circuit. The first chip may be based on a synchronous integrated circuit, or may be based on an asynchronous clock integrated circuit. In this case, the first description file related to the first chip may be related description files of a plurality of sub-circuits in the synchronous integrated circuit, or may be related description files of a plurality of sub-circuits in the asynchronous clock integrated circuit. The second description file may be generated based on the logical function of the asynchronous clock interface circuit. A description file related to a logical function of the processing chip, namely, the third description file, is obtained based on a combination of the first description file and the second description file. After timing constraint is performed on the third description file to ensure that a logical function of the third description file runs properly, the logic circuit structure of the processing chip is designed based on the third description file on which timing constraint is performed, to obtain a design layout. Subsequently, the processing chip may be manufactured based on the design layout. The third description file is obtained based on the first description file of the first chip with reference to the second description file through improvement, so that a design procedure of the processing chip can be greatly shortened, a design difficulty of the processing chip can be reduced, and the like.

In some possible implementations, the design method further includes: before obtaining a logic circuit structure of the processing chip based on a third description file on which timing constraint is performed, modifying the third description file on which timing constraint is performed, and performing design constraint on a modified third description file. In this embodiment of this application, the third description file may be adaptively modified based on different actual application scenarios and the like. In addition, in a process of the timing constraint, content that does not satisfy the related timing constraint may also be modified. Then, design constraint is performed on a modified file. According to this embodiment of this application, reliability, applicability, and the like of the processing chip can be improved.

According to a third aspect, an embodiment of this application further provides an electronic device. The electronic device includes a circuit board and the processing chip described in the first aspect. The processing chip is disposed on the circuit board.

For technical principles and beneficial effects of the second aspect and the third aspect, refer to related descriptions of the first aspect. Details are not described herein again.

### BRIEF DESCRIPTION OF DRAWINGS

FIG. 1 is a diagram of a design procedure of a synchronous integrated circuit based on an EDA design tool according to an embodiment of this application;
FIG. 2 is a diagram of a structure of an electronic device according to an embodiment of this application;
FIG. 3 is a diagram of a structure of a processing chip according to an embodiment of this application;
FIG. 4 is a diagram of a structure of a first asynchronous clock interface circuit according to an embodiment of this application;
FIG. 5 is a diagram of a structure of a second asynchronous clock interface circuit according to an embodiment of this application;
FIG. 6 is a diagram 1 of a structure of a third asynchronous clock interface circuit according to an embodiment of this application;
FIG. 7 is a diagram 2 of a structure of another third asynchronous clock interface circuit according to an embodiment of this application;
FIG. 8 is a diagram 3 of a structure of still another third asynchronous clock interface circuit according to an embodiment of this application;
FIG. 9 is a diagram 4 of a structure of still another third asynchronous clock interface circuit according to an embodiment of this application;
FIG. 10 is a diagram 5 of a structure of still another third asynchronous clock interface circuit according to an embodiment of this application;
FIG. 11 is a diagram 6 of a structure of still another third asynchronous clock interface circuit according to an embodiment of this application;
FIG. 12 is a diagram 7 of a structure of still another third asynchronous clock interface circuit according to an embodiment of this application;
FIG. 13 is a diagram of a structure of a level logic conversion circuit for converting edge triggering to level triggering according to an embodiment of this application;
FIG. 14 is a diagram of a structure of a level logic conversion circuit for converting level triggering to edge triggering according to an embodiment of this application;
FIG. 15 is a diagram 8 of a structure of still another third asynchronous clock interface circuit according to an embodiment of this application;
FIG. 16 is a diagram of a structure of a processing chip in a system on chip architecture according to an embodiment of this application;
FIG. 17 is a diagram of a structure of a processing chip of network on chip processing according to an embodiment of this application;
FIG. 18 is a schematic flowchart of a design method for an asynchronous clock integrated circuit according to an embodiment of this application;
FIG. 19 is a diagram of an input of a clock signal of a synchronous integrated circuit described in a first description file according to an embodiment of this application;
FIG. 20 is a schematic flowchart of a design method for a very-large-scale asynchronous clock integrated circuit based on a scenario shown in FIG. 19 according to an embodiment of this application;
FIG. 21 is a diagram of a timing constraint of each circuit signal in a design of an asynchronous clock integrated circuit according to an embodiment of this application;
FIG. 22 is a diagram of an input of a clock signal of an asynchronous clock integrated circuit described in a first description file according to an embodiment of this application;
FIG. 23 is a schematic flowchart of a design method for a very-large-scale asynchronous clock integrated circuit based on a scenario shown in FIG. 22 according to an embodiment of this application;
FIG. 24 is a diagram of a timing constraint check signal according to an embodiment of this application;
FIG. 25 is a diagram of a check module for checking timing constraint according to an embodiment of this application; and
FIG. 26 is a diagram of a check module for checking a maximum delay according to an embodiment of this application.

### DESCRIPTION OF EMBODIMENTS

It should be noted that in embodiments of this application, terms such as "first" and "second" are merely used to distinguish between features of a same type, and cannot be understood as an indication of relative importance, a quantity, a sequence, or the like.

In embodiments of this application, terms such as "example" or "for example" are used to represent giving an example, an illustration, or a description. Any embodiment or design scheme described as an "example" or "for example" in this application should not be explained as being more preferred or having more advantages than another embodiment or design scheme. To be precise, the words such as "example" or "for example" are intended to present a relative concept in a specific manner.

The terms "coupling" and "connection" in embodiments of this application should be understood in a broad sense. For example, the term may refer to a physical direct connection, or may refer to an indirect connection implemented through an electronic component, for example, a connection implemented through a resistor, an inductor, a capacitor, or another electronic component.

First, some basic concepts in embodiments of this application are explained and described.

Electronic design automation (electronic design automation, EDA) refers to a design manner in which computer-aided design (computer-aided design, CAD) software is used for completing a function design, synthesis, verification, a physical design (including a placement, routing, a layout, design rule check, and the like), and other procedures of a very large scale integrated circuit (very large scale integrated circuit, VLSI) chip.

An intellectual property (intellectual property, IP) core plays a very important role in the EDA, and may be understood as a pre-designed circuit function module in an integrated circuit. Specifically, the IP core may be classified into a soft IP core, a fixed IP core, a hard IP core, and the like. The soft IP core is a software function block described by using some hardware description languages, but does not involve a specific circuit element used for implementing these functions. To some extent, the soft IP core makes a subsequent process unable to adapt to an overall design. Therefore, a certain degree of soft IP correction is required. The hard IP core is configured to provide a final stage product of the design, namely, a mask. The mask is represented as a netlist (netlist) on which a placement and routing are completely performed. The fixed IP core is a function block combining the soft IP core and the hard IP core. Soft IP cores are usually provided in an encryption form. In this way, an actual register level (register transfer level, RTL) description is invisible to a user, but a placement and routing are flexible. In these encrypted soft IP cores, if a building block is parameterized, the user can conveniently perform an adjustment operation on a parameter by using a header file or a graphical user interface (graphical user interface, GUI). For those building blocks that have a strict timing requirement, a specific signal may be pre-routed or a specific routing resource may be allocated to satisfy the timing requirement. These building blocks may be classified as fixed IP cores. Because the building block is a pre-designed code module, an overall design that contains the building block may be affected.

A very large scale integrated circuit (very large scale integration, VLSI) is an integrated circuit that combines a large quantity of transistors into a single chip, and an integration level of the very large scale integrated circuit is greater than that of a large-scale integrated circuit. A very large scale integrated circuit design (VLSI design) is usually performed in an electronic design automation (electronic design automation, EDA) manner. The quantity of integrated transistors varies in different standards. With development of complex semiconductors and communication technologies, research and development of integrated circuits are gradually carried out. With rapid improvement of an integration level of a chip, more IP cores are integrated on a single chip, to form a system on chip (system on chip, SoC). The SoC may be integrated with a digital signal processor (digital signal processor, DSP), a microcontroller (micro controller unit, MCU), a memory (memory), an analog-to-digital converter (analog-to-digital converter, ADC), a digital-to-analog converter (digital-to-analog converter, DAC), a universal asynchronous receiver/transmitter circuit (universal asynchronous receiver/transmitter, UART), and homogeneous or heterogeneous IP cores of software and hardware modules and the like that implement a dedicated customized function. Therefore, data communication and exchange between different IP cores in the chip become one of key technologies in SoC chip design. Currently, existing communication structures mainly include point-to-point communication, bus-based communication, crossbar-based communication, and network-based communication. However, as the integration level of the integrated circuit increases, a quantity of IP cores in the integrated circuit also increases. In the foregoing communication manner, there are problems such as a design placement difficulty, a communication exchange conflict, an increase in communication power consumption, poor scalability, reduced communication reliability, and a reduced throughput. To resolve respective problems in the foregoing communication manners in the SoC, a design architecture of a network on chip (network on chip, NoC) is proposed in the industry.

A metastable state means that a flip-flop cannot reach a confirmable state (for example, a 0 level or a 1 level) within a specified time period. When a flip-flop enters the metastable state, neither an output level of a circuit unit can be predicted, nor when an output can be stabilized at a correct level can be predicted. During a stabilization period, flip-flops output some intermediate levels, or may be in an oscillating state, and such useless output levels may be propagated in a cascaded manner along the flip-flops on a signal channel.

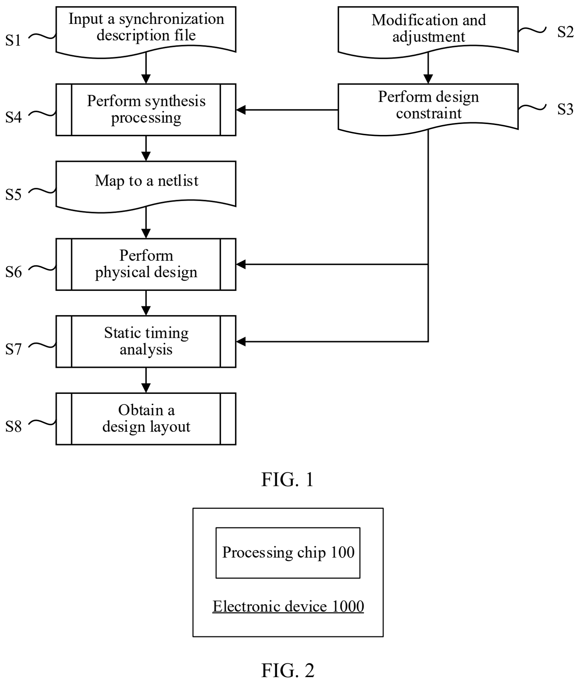

A global synchronization clock means a circuit design in which all circuits in an integrated circuit are implemented based on a same clock signal. The integrated circuit based on the global synchronization clock may also be referred to as a synchronous clock integrated circuit. The synchronous clock integrated circuit is based on two basic assumptions: All signals in the synchronous clock integrated circuit are in a binary form; and all elements in the synchronous clock integrated circuit share a common discrete timing, where the discrete timing is defined by a global synchronization clock signal distributed in the entire synchronous clock integrated circuit. In the synchronous clock integrated circuit, data processing is completed by using combinational logic. The combinational logic has no storage function, and all data signals are in a form of line variables. In this case, a change of an input state of the synchronous clock integrated circuit is immediately reflected in an output signal, and is irrelevant to a previous state of the synchronous clock integrated circuit. In this case, timing logic is responsible for data storage. The timing logic has a memory function, and an output at any moment is determined by both a current input and the previous state of the synchronous clock integrated circuit. The global synchronization clock signal is used for standardizing a timing of the synchronous clock integrated circuit, to ensure a correct operation of the synchronous clock integrated circuit. Because all input signals in the synchronous clock integrated circuit include only two logical states: 0 and 1, the global synchronization clock signal is used for control. In this control manner, as long as a requirement of "establishing specific hold time" is satisfied, the metastable state of the synchronous clock integrated circuit can be effectively avoided, and a glitch caused by combinational logic competition and adventure can be filtered out, so that a complex intermediate state in the integrated circuit is hidden. This method greatly simplifies a design and verification of the synchronization circuit. Therefore, in long-term development, a complete top-down design procedure and a matching EDA design tool have been established for the design of the synchronous clock integrated circuit based on the global synchronization clock signal, so that a designer can simply and effectively design a required very large scale integrated circuit chip. In most integrated circuit designs in the past, the global synchronization clock signal design is used for obtaining the synchronous clock integrated circuit. A design manner of the synchronous clock integrated circuit has always occupied a mainstream position in the industry. FIG. 1 is a schematic flowchart of designing a synchronous clock integrated circuit based on an EDA design tool. A specific procedure includes the following steps: S1: Input a synchronization description file. The synchronization description file is an RTL description file used for describing a logical function of the synchronous clock integrated circuit. S2: Modify and adjust a synchronization description file on which timing constraint (timing constraint) is performed. S3: Perform design constraint (design constraint) on a modified and adjusted synchronization description file. S4: Perform synthesis (synthesis) processing on a synchronization description file on which design constraint is performed, to obtain a synthesis structure of a corresponding logic gate circuit. S5: Map the synthesis structure of the logic gate circuit to a netlist (netlist). S6: Perform physical design (physical design) placement based on the mapped netlist. S7: Perform static timing analysis (static timing analysis, STA) on a circuit structure obtained through the physical design. S8: Obtain a final design layout of the synchronous clock integrated circuit after the static timing analysis is completed.

With an increase in a function integration level and a quantity of components of the integrated circuit, more problems occur when a global synchronization clock signal is used in a very large scale integrated circuit. For example, first, when a control manner of the global synchronization clock signal is used, a clock cycle is determined by a key path with a longest delay, and performance of a chip is worst performance limited by factors such as a process, a temperature, and a voltage. Second, using the global synchronization clock signal in the very large scale integrated circuit has an increasingly high requirement on design complexity of a clock circuit. Due to continuous improvement of a chip integration level, it is increasingly difficult to design a clock circuit without clock skew (clock skew). In addition, factors such as thermal noise, power noise, and crosstalk in the chip also cause a clock jitter (clock jitter), affecting correctness of timing logic. Third, the global synchronization clock signal is for controlling all timing components in the chip. Even if a transmitted data signal does not change, a flip of the clock signal generates unnecessary power consumption. In addition, as a chip area increases with an increase of the integration level, there is a long connection line in a clock distribution circuit, and extra power consumption, especially power consumption of leakage current, of the clock signal is generated for driving the long connection line. Therefore, in a design of the synchronous clock integrated circuit, such power consumption of the clock signal occupies a large part of power consumption waste of the chip. For example, in a synchronous NoC that uses the global synchronization clock signal, because the NoC includes homogeneous or heterogeneous IP cores, the IP cores may have different operating frequencies, electrical characteristics, and timing constraints. If the control manner of the global synchronization clock signal is used, in a process of designing the synchronous clock integrated circuit, once a new IP core is added, a global synchronization clock network needs to be adjusted or even redesigned. This increases a chip design periodicity and complexity. Therefore, some researchers propose to design an asynchronous clock integrated circuit by using an asynchronous clock signal. In the asynchronous clock integrated circuit, a handshaking (handshaking) mechanism may be used for replacing the global synchronization clock signal. Under control of a handshake signal, transmission of a data stream is performed between two sub-circuits of different clock signals in a pipeline manner. The handshake signal includes a request signal and a feedback signal. A specific handshake manner is as follows: A first sub-circuit of a transmitting end sends the request signal and data, and a second sub-circuit of a receiving end feeds back a response signal to the transmitting end after receiving the data, to start a next data cycle. The asynchronous clock integrated circuit is data-driven, next data processing can start after a current data cycle ends, and it does not need to wait for a fixed clock cycle like the synchronous integrated circuit. Because a global clock is removed, the asynchronous circuit has the following advantages over the synchronous circuit: (1) A global timing is removed, so that the circuit is easy to be modularized, and has high design flexibility; (2) the global clock is removed to avoid problems such as clock skew; (3) the asynchronous circuit has a characteristic of low power consumption; (4) the asynchronous circuit has a characteristic of potential high performance; (5) the asynchronous circuit is insensitive to a signal delay and more adaptable to a process; (6) the asynchronous circuit has better electromagnetic compatibility.

Although the asynchronous clock integrated circuit has many advantages, the asynchronous clock integrated circuit also has some problems compared with the synchronous clock integrated circuit. The asynchronous clock integrated circuit has no global synchronization clock. Therefore, the asynchronous clock integrated circuit has no shielding function of a synchronization pulse, and cannot filter out a glitch caused by combinational logic competition and adventure, and the like. In addition, a complex intermediate state (namely, a metastable state) that may occur in the synchronous clock integrated circuit increases exponentially, which is very likely to cause great harm to the circuit. Therefore, the complex intermediate state needs to be discovered and removed as much as possible to ensure a correct circuit function. Therefore, when a circuit design of the very large scale integrated circuit in asynchronous integration is performed, more serious state fault problems need to be faced in a process of design verification than that of the synchronous clock integrated circuit. In addition, for a complex system, it is difficult to manually resolve the fault problems completely in the design verification. In terms of a design of the asynchronous clock integrated circuit, there are the following design manners in the industry: Design manner 1: A synthetic asynchronous bundled data (bundled data, BD) controller circuit is designed based on a signal transition graph (signal transition graph, STG), but it is difficult to draw a complete STG when an integration scale is large. Design manner 2: Based on a physical design tool, optimization and analysis are performed based on a placement and routing of the asynchronous clock integrated circuit, to design the asynchronous clock integrated circuit. However, in this manner, the placement and routing of the circuit need to be manually designed and adjusted, and it is also difficult to apply this manner to the design of the very large scale integrated circuit. Design manner 3: An open-source EDA design tool based on an asynchronous clock integrated circuit is used for describing and synthesizing a syntax-oriented asynchronous clock integrated circuit by using the EDA design tool. However, in development of integrated circuits over the years, the industry focuses on research and the design of the synchronous clock integrated circuits, and an open-source EDA design tool is developed for a synchronous circuit system. Development of the asynchronous clock integrated circuit has been stagnant for many years. Unlike the design of the synchronous clock integrated circuit, there is no complete design method, procedure, and EDA design tool for the asynchronous clock integrated circuit. An imperfect design procedure, lack of the design tool, and complex verification increase a difficulty of the design of the asynchronous clock integrated circuit to some extent.

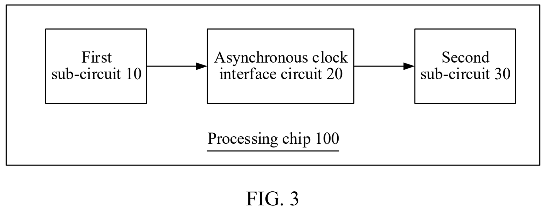

Embodiments of this application provide an electronic device. As shown in FIG. 2, the electronic device 1000 includes a circuit board and a processing chip 100. The processing chip 100 is disposed on the circuit board. The processing chip 100 includes a plurality of sub-circuits. The plurality of sub-circuits include a first sub-circuit and a second sub-circuit, and the first sub-circuit and the second sub-circuit are sub-circuits based on different clock signals. As shown in FIG. 3, the processing chip 100 further includes an asynchronous clock interface circuit 20. The asynchronous clock interface circuit 20 is separately coupled to the first sub-circuit 10 and the second sub-circuit 30, to implement asynchronous exchange of a data signal and/or asynchronous exchange of a control signal.

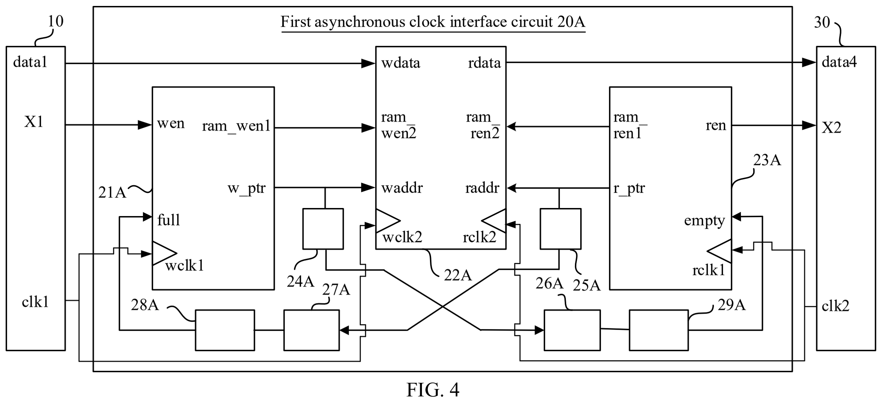

In some possible implementations, the asynchronous clock interface circuit 20 in the embodiment shown in FIG. 3 is a first asynchronous clock interface circuit based on an asynchronous first in first out (first in first out, FIFO) memory. The asynchronous exchange of the data signal is implemented through the first asynchronous clock interface circuit. As shown in FIG. 4, a first asynchronous clock interface circuit 20A includes a write controller 21A, a data transmission memory 22A, a read controller 23A, a first Gray code conversion circuit 24A, a second Gray code conversion circuit 25A, a first synchronization circuit 26A, a second synchronization circuit 27A, a full-state circuit 28A, and an empty-state circuit 29A. The data transmission memory 22A is a FIFO memory. A first data output end data1 of a first sub-circuit 10 is coupled to a data input end wdata of the data transmission memory 22A. A data output end rdata of the data transmission memory 22A is coupled to a second data input end data4 of a second sub-circuit 30. A first signal end X1 of the first sub-circuit 10 is coupled to a first write enable end wen of the write controller 21A. A second write enable end ram_wen1 of the write controller 21A is coupled to a storage write enable end ram_wen2 of the data transmission memory 22A. A second signal end X2 of the second sub-circuit 30 is coupled to a first read enable end ren of the read controller 23A. A second read enable end ram_ren1 of the read controller 23A is coupled to a storage read enable end ram_ren2 of the data transmission memory 22A. A write pointer input end w_ptr of the write controller 21A is separately coupled to an input end of the first Gray code conversion circuit 24A and a first operation address end waddr of the data transmission memory 22A. A read pointer input end r_ptr of the read controller 23A is separately coupled to an input end of the second Gray code conversion circuit 25A and a second operation address end raddr of the data transmission memory 22A. An output end of the first Gray code conversion circuit 24A is coupled to an input end of the empty-state circuit 29A through the first synchronization circuit 26A. An output end of the empty-state circuit 29A is coupled to an empty-state end empty of the read controller 23A. An output end of the second Gray code conversion circuit 25A is coupled to an input end of the full-state circuit 28A through the second synchronization circuit 27A. An output end of the full-state circuit 28A is coupled to a full-state end full of the write controller 21A.

In the embodiment shown in FIG. 4, a first clock output end clk1 of the first sub-circuit 10 is separately coupled to a first read clock control end wclk1 of the write controller 21A and a second read clock control end wclk2 of the data transmission memory 22A. A clock output end of the second sub-circuit 30 is separately coupled to a first write clock control end rclk1 of the read controller 23A and a second write clock control end rclk2 of the data transmission memory 22A. The first sub-circuit 10 and the second sub-circuit 30 are based on different clock signals. The first Gray code conversion circuit 24A and the second Gray code conversion circuit 25A convert binary code to Gray code, and perform pointer synchronization on an asynchronous FIFO cache by using the Gray code. In this embodiment of this application, the data transmission memory 22A used as the FIFO memory needs to be disposed, and a large chip size is required for the data transmission memory 22A to store data. In addition, circuits such as the write controller 21A, the read controller 23A, the first Gray code conversion circuit 24A, the second Gray code conversion circuit 25A, the first synchronization circuit 26A, the second synchronization circuit 27A, the full-state circuit 28A, and the empty-state circuit 29A need to be additionally disposed to form a read/write control circuit, and an additional read/write control area is also very large. In addition, to resolve a cross-clock-domain problem between the first sub-circuit 10 and the second sub-circuit 30, the first Gray code conversion circuit 24A, the second Gray code conversion circuit 25A, the first synchronization circuit 26A, the second synchronization circuit 27A, and the like are used for performing pointer synchronization. However, the pointer synchronization limits data transmission performance of the data transmission memory 22A, causing area and performance losses.

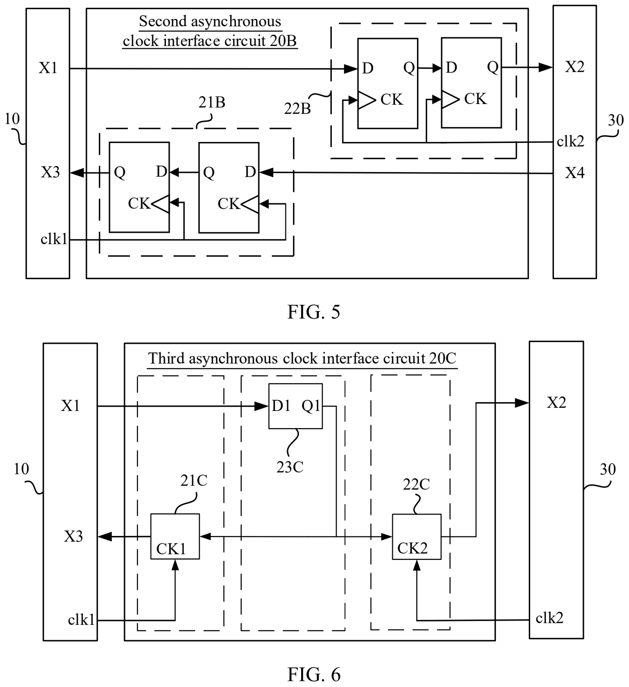

In some possible implementations, the asynchronous clock interface circuit 20 in the embodiment shown in FIG. 3 is a second asynchronous clock interface circuit. The asynchronous exchange of the control signal is implemented through the second asynchronous clock interface circuit. As shown in FIG. 5, the second asynchronous clock interface circuit 20B includes a send beat conversion circuit 21B and a receive beat conversion circuit 22B. A first signal end X1 of a first sub-circuit 10 is coupled to an input end of the receive beat conversion circuit 22B. An output end of the receive beat conversion circuit 22B is coupled to a second signal end X2 of a second sub-circuit 30. A fourth signal end X4 of the second sub-circuit 30 is coupled to an input end of the send beat conversion circuit 21B. An output end of the send beat conversion circuit 21B is coupled to a third signal end X3 of the first sub-circuit 10. A first clock output end clk1 of the first sub-circuit 10 is coupled to an enable end of the send beat conversion circuit 21B. A second clock output end clk2 of the second sub-circuit 30 is coupled to an enable end of the receive beat conversion circuit 22B.

In the embodiment shown in FIG. 5 of this application, the first sub-circuit 10 is based on a first clock signal, and the second sub-circuit 30 is based on a second clock signal. When exchange of the control signal that is used as a handshake signal is performed between the two sub-circuits, to avoid a metastable state problem caused by direct exchange of control signals under different clock signals, the send beat conversion circuit 21B and the receive beat conversion circuit 22B need to be disposed to perform beating operations under the different clock signals when the control signal enters different clock domains. The first sub-circuit 10 sends a handshake request signal to the input end of the receive beat conversion circuit 22B through the first signal end X1, where the handshake request signal is based on the first clock signal of the first sub-circuit 10. The receive beat conversion circuit 22B operates based on the second clock signal of the second sub-circuit 30. After the handshake request signal is input, the receive beat conversion circuit 22B beats the handshake request signal for N beats based on the second clock signal of the second sub-circuit 30, to obtain a handshake request signal that is based on the second clock signal. Then, the receive beat conversion circuit 22B sends the handshake request signal that is based on the second clock signal to the second signal end X2 of the second sub-circuit 30. After the handshake request signal that is based on the second clock signal is input, the second sub-circuit 30 outputs a handshake feedback signal, where the handshake feedback signal is based on the second clock signal. The second sub-circuit 30 sends, through the fourth signal end X4, the handshake feedback signal that is based on the second clock signal to the input end of the send beat conversion circuit 21B. The send beat conversion circuit 21B beats, based on the first clock signal, the handshake feedback signal that is based on the second clock signal for M beats, to obtain a handshake feedback signal that is based on the first clock signal. Then, the send beat conversion circuit 21B sends the handshake feedback signal that is based on a first distortion signal to the third signal end X3 of the first sub-circuit 10. A process from outputting the handshake request signal by the first sub-circuit 10 to receiving the handshake feedback signal by the first sub-circuit 10 is a handshake between the first sub-circuit 10 and the second sub-circuit 30. In this process, the beating operations of the send beat conversion circuit 21B and the receive beat conversion circuit 22B cause a delay. For example, if both N and M are 2, a delay of four beats exists in one handshake operation. If values of N and M are larger, a delay of one handshake operation is also larger. In this case, exchange performance of the asynchronous clock integrated circuit is significantly lower than exchange performance of a synchronous integrated circuit.

In some possible implementations, to reduce the delay of the handshake operation in the asynchronous clock integrated circuit, the asynchronous clock interface circuit 20 in the embodiment shown in FIG. 3 is a third asynchronous clock interface circuit. The asynchronous exchange of the control signal is implemented through the third asynchronous clock interface circuit. As shown in FIG. 6, the third asynchronous clock interface circuit 20C includes a send interface, an asynchronous conversion interface, and a receive interface. The send interface includes a first beat conversion circuit 21C. The receive interface includes a second beat conversion circuit 22C. The asynchronous conversion interface includes a first trigger circuit 23C. A first signal end X1 of a first sub-circuit 10 is coupled to a trigger input end D1 of the first trigger circuit 23C. A trigger output end Q1 of the first trigger circuit 23C is separately coupled to an input end of the first beat conversion circuit 21C and an input end of the second beat conversion circuit 22C. An output end of the first beat conversion circuit 21C is coupled to a third signal end X3 of the first sub-circuit 10. An output end of the second beat conversion circuit 22C is coupled to a second signal end X2 of a second sub-circuit 30. A first clock output end clk1 of the first sub-circuit 10 is coupled to a first clock end CK1 of the first beat conversion circuit 21C. A second clock output end clk2 of the second sub-circuit 30 is coupled to a second clock end CK2 of the second beat conversion circuit 22C.

In the embodiment shown in FIG. 6 of this application, the first signal end X1 of the first sub-circuit 10 outputs a first handshake request signal to the trigger input end D1 of the first trigger circuit 23C. After the first trigger circuit 23C receives the first handshake request signal, the first handshake request signal triggers the first trigger circuit 23C to send, by triggering the output end Q1, a second handshake request signal to the input end of the first beat conversion circuit 21C and the input end of the second beat conversion circuit 22C. After beating the second handshake request signal for M beats, the second beat conversion circuit 22C obtains a second handshake request signal that is based on a second clock signal, and sends a second clock handshake signal to the second signal end X2 of the second sub-circuit 30. After beating the second handshake request signal for N beats, the first beat conversion circuit 21C obtains a second handshake feedback signal that is based on a first clock signal, and sends the second handshake feedback signal to the third signal end X3 of the first sub-circuit 10. In this embodiment of this application, the first trigger circuit 23C sends the second handshake request signal to the first beat conversion circuit 21C and the second beat conversion circuit 22C simultaneously for beating. In the embodiment shown in FIG. 5, the send beat conversion circuit 21B and the receive beat conversion circuit 22B separately perform beating, and a beat delay is N+M. In the embodiment shown in FIG. 6, the first beat conversion circuit 21C and the second beat conversion circuit 22C simultaneously perform beating. In this case, a beat delay is N or M (where a larger delay of N and M is selected). In comparison with the embodiment shown in FIG. 5, the embodiment shown in FIG. 6 can greatly reduce the delay caused by the beat, so that exchange performance of an asynchronous clock integrated circuit is improved.

For example, the first trigger circuit 23C may be a D flip-flop, a latch, or the like.

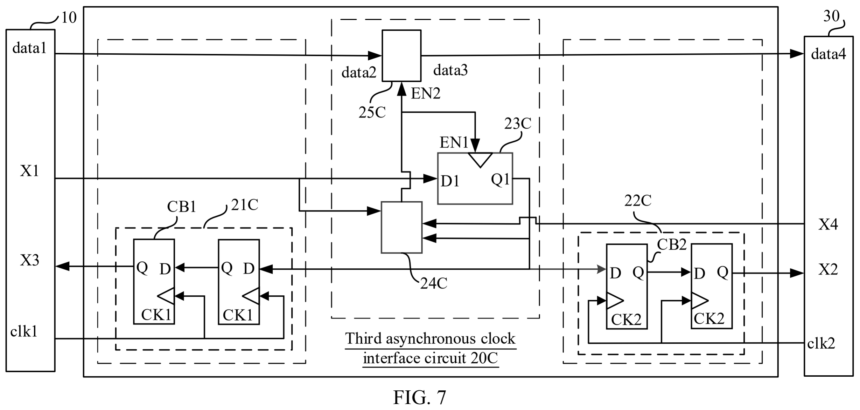

In some possible implementations, as shown in FIG. 7, a first beat conversion circuit 21C includes a plurality of first beat flip-flops CB1 connected in series. A second beat conversion circuit 22C includes a plurality of second beat flip-flops CB2. A first clock output end clk1 of a first sub-circuit 10 is separately coupled to first clock ends CK1 of the plurality of first beat flip-flops CB1. A second clock output end clk2 of a second sub-circuit 30 is separately coupled to second clock ends CK2 of the plurality of second beat flip-flops CB2. Optionally, the first beat flip-flop CB1 and/or the second beat flip-flop CB1 may be a D flip-flop or the like. Optionally, a quantity of the plurality of first beat flip-flops CB1 is equal to or may not be equal to a quantity of the plurality of second beat flip-flops CB2.

In some possible implementations, a third clock signal independent of a first clock signal and a second clock signal may be used for controlling an operation of a first trigger circuit 23C. As shown in FIG. 7, an asynchronous conversion interface of a third asynchronous clock interface circuit 20C further includes a clock generation circuit 24C. A plurality of input ends of the clock generation circuit 24C are respectively coupled to a first signal end X1 of the first sub-circuit 10, a trigger output end Q1 of the first trigger circuit 23C, and a fourth signal end X4 of the second sub-circuit 30. An output end of the clock generation circuit 24C is coupled to a first enable end ENT1 of the first trigger circuit 23C. In this embodiment of this application, the first signal end X1 of the first sub-circuit 10 outputs a first handshake request signal that is based on the first clock signal. The trigger output end Q1 of the first trigger circuit 23C outputs a second handshake request signal. The fourth signal end X4 of the second sub-circuit 30 outputs a first handshake feedback signal that is based on the second clock signal. The clock generation circuit 24C generates, based on the first handshake request signal, the second handshake request signal, and the first handshake feedback signal, a clock enable signal that is based on the third clock signal. The clock generation circuit 24C outputs the clock enable signal to the first enable end EN1 of the first trigger circuit 23C, so that the second handshake request signal output by the first trigger circuit 23C is based on the clock enable signal.

In some possible implementations, the asynchronous exchange of the data signal may be further performed based on the third asynchronous clock interface circuit 20C. As shown in FIG. 7, the asynchronous conversion interface of the third asynchronous clock interface circuit 20C further includes a data cache 25C. A first data output end data1 of the first sub-circuit 10 is coupled to a first data input end data2 of the data cache 25C. A second data output end data3 of the data cache 25C is coupled to a second data input end data4 of the second sub-circuit 30. The output end of the clock generation circuit 24C is separately coupled to a second enable end EN2 of the data cache 25C. In this embodiment of this application, the clock generation circuit 24C further outputs a clock enable signal to the second enable end EN2 of the data cache 25C. The data cache 25C is controlled, based on the clock enable signal, to output a latched data signal to the second data input end data4 of the second sub-circuit 30, to complete asynchronous exchange and transmission of the data signal between the first sub-circuit 10 and the second sub-circuit 30. In comparison with the embodiment shown in FIG. 4, in the embodiment shown in FIG. 7 of this application, a large-area FIFO storage component does not need to be disposed, and a very-large-area synchronous control circuit does not need to be additionally disposed. The asynchronous exchange circuit based on the control signal shown in FIG. 6 can control the asynchronous exchange of the data signal. In addition, the delay of the asynchronous exchange of the control signal shown in FIG. 6 is small, so that exchange performance of the asynchronous exchange of data information in the embodiment shown in FIG. 7 can be improved.

For example, the data cache 25C may be a register, a latch, or the like.

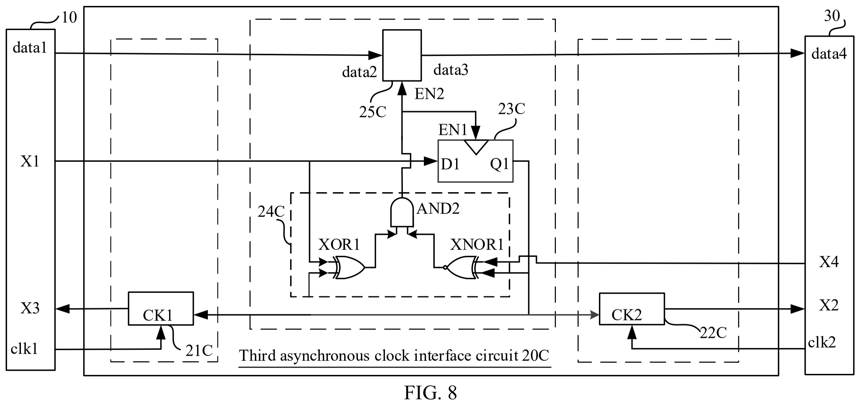

In some possible implementations, as shown in FIG. 8, a clock generation circuit 24C includes an XOR gate XOR1, an XNOR gate XNOR1, and a second AND gate AND2. A plurality of input ends of the clock generation circuit 24C include a first input end of the XOR gate XOR1, a second input end of the XOR gate XOR1, a first input end of the XNOR gate XNOR1, and a second input end of the XNOR gate XNOR1. The first input end of the XOR gate XOR1 is coupled to a first signal end X1 of a first sub-circuit 10. The second input end of the XOR gate XOR1 is coupled to a trigger output end Q1 of a first trigger circuit 23C. The first input end of the XNOR gate XNOR1 is coupled to a fourth signal end X4 of a second sub-circuit 30. The second input end of the XNOR gate XNOR1 is coupled to the trigger output end Q1 of the first trigger circuit 23C. An output end of the XOR gate XOR1 is coupled to a first input end of the second AND gate AND2. An output end of the XNOR gate XNOR1 is coupled to a second input end of the second AND gate AND2.

An output end of the second AND gate AND2 is an output end of the clock generation circuit 24C. In this embodiment of this application, performing, by using the XOR gate XOR1, XOR logic processing on a first handshake request signal that is based on a first clock signal and a second handshake request signal that is based on a clock enable signal is specifically: When the first handshake request signal and the second handshake request signal are at different levels, the XOR gate XOR1 outputs a high level. Performing, by using the XNOR gate XNOR1, XOR-NOT (namely, XNOR) logic processing on a first handshake feedback signal based on a second clock signal and the second handshake request signal based on the clock enable signal is specifically: When the first handshake feedback signal and the second handshake request signal are at different levels, the XNOR gate XNOR1 outputs a high level. Then, a logical AND operation is performed, by using the second AND gate AND2, on a level signal output by the XOR gate XOR1 and a level signal output by the XNOR gate XNOR1, to obtain the clock enable signal.

In some possible implementations, as shown in FIG. 8, an asynchronous conversion interface of a third asynchronous clock interface circuit 20C further includes a pulse width delay circuit 26C. An output end of a clock generation circuit 24C is coupled to a first enable end EN1 of a first trigger circuit 23C through the pulse width delay circuit 26C. In this embodiment of this application, in some actual application scenarios, a pulse width of a clock enable signal required by the first trigger circuit 23C is large. The pulse width of the clock enable signal required by the first trigger circuit 23C may be increased by disposing the pulse width delay circuit 26C, to satisfy a requirement in a corresponding scenario.

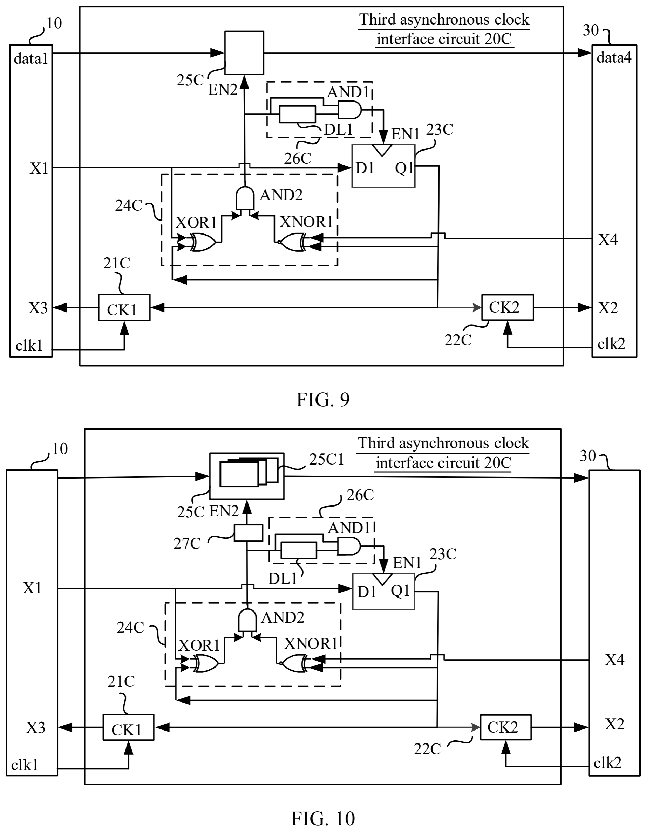

For example, as shown in FIG. 9, a pulse width delay circuit 26C includes a delay circuit DL1 and a first AND gate AND1. An output end of a clock generation circuit 24C is coupled to a first input end of the first AND gate AND1. The output end of the clock generation circuit 24C is further coupled to a second input end of the first AND gate AND1 through the delay circuit DL1. In this embodiment of this application, the delay circuit DL1 performs delay processing on a channel of input clock enable signals, so that an effective pulse width (namely, a high level of 1) of the clock enable signal is delayed, and a clock enable signal obtained through delay processing is output to the second input end of the first AND gate AND 1. In addition, the first input end of the first AND gate AND1 further inputs an undelayed clock enable signal. The first AND gate AND1 performs a logical AND operation on the input undelayed clock enable signal and the clock enable signal obtained through delay processing, to adjust an effective pulse width of a signal that is output to a first enable end EN1 of the first trigger circuit 23C.

For example, the delay circuit DL1 includes an even quantity of cascaded phase inverters. In this embodiment of this application, the even quantity of cascaded phase inverters is logically equivalent to no phase inverter in terms of an output signal. However, the even quantity of phase inverters may form an oscillator, so that an output voltage signal reaches a steady state, to avoid voltage competition. In addition, the plurality of cascaded phase inverters may increase a specific delay of the clock enable signal. After the logical AND operation is performed, at the first AND gate AND1, on the delayed clock enable signal and the undelayed clock enable signal, clock enable signals with different pulse widths may be obtained.

In some possible implementations, the data signal exchanged between the first sub-circuit 10 and the second sub-circuit 30 includes a plurality of bits. In this case, as shown in FIG. 10, a data cache 25C includes a plurality of data cache units 25C1. In this embodiment of this application, when the data cache 25C latches the data signal of the plurality of bits, the plurality of data cache units 25C1 may be disposed in the data cache 25C. The plurality of data cache units 25C1 latch the data signal of the plurality of bits, and output the data signal to the second sub-circuit 30.

For example, each data cache unit 25C1 may be a register or a latch.

For example, as shown in FIG. 10, an asynchronous conversion interface of a third asynchronous clock interface circuit 20C further includes a voltage keeping circuit 27C. An output end of a clock generation circuit 24C is coupled to a second enable end EN2 of the data cache 25C through the voltage keeping circuit 27C. In this embodiment of this application, when a large quantity of data signals are required, duration of an effective pulse width (namely, a high level) of a clock enable signal may be insufficient to drive all data cache units 25C1 to output data signals to the second sub-circuit 30. In this case, the voltage keeping circuit 27C may be disposed to prolong enabling time of the clock enable signal for the plurality of data cache units 25C1.

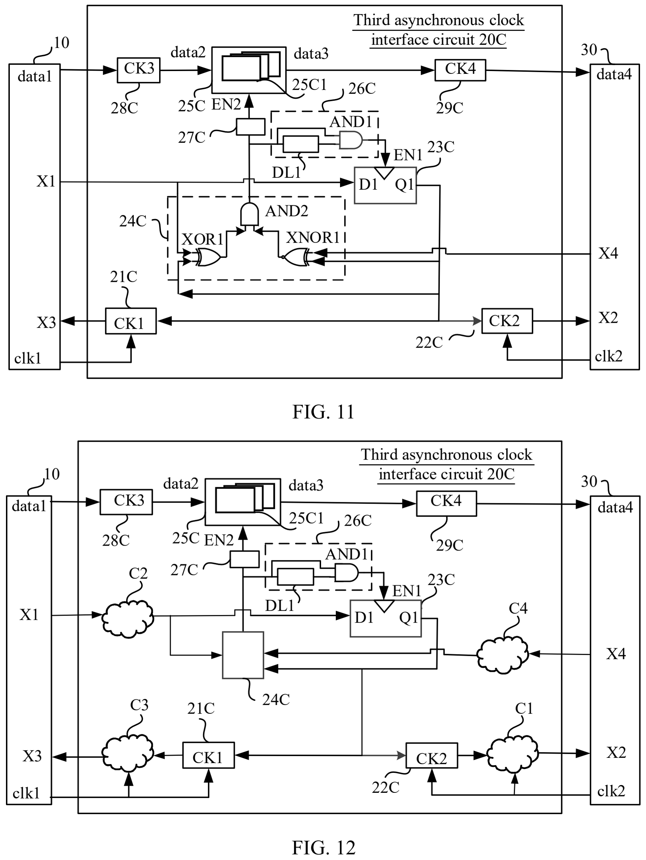

In some possible implementations, as shown in FIG. 11, a send interface of a third asynchronous clock interface circuit 20C further includes a first register 28C. A first data output end data1 of a first sub-circuit 10 is coupled to an input end of the first register 28C. An output end of the first register 28C is coupled to a first data input end data2 of a data cache 25C. A first clock output end clk1 of the first sub-circuit 10 is further coupled to a third clock end CK3 of the first register 28C. In this embodiment of this application, the first register 28C may perform a beating operation on a data signal output by the first sub-circuit 10. In addition, when a large quantity of data signals need to be exchanged, the first sub-circuit 10 may first cache an output data signal to the first register 28C, and then output the output data signal to the data cache 25C through the first register 28C.

In some possible implementations, as shown in FIG. 11, a receive interface of the third asynchronous clock interface circuit 20C further includes a second register 29C. An input end of the second register 29C is coupled to a second data output end data3 of the data cache 25C. An output end of the second register 29C is coupled to a second data input end data4 of a second sub-circuit 30. A second clock output end clk2 of the second sub-circuit 30 is further coupled to a fourth clock end CK4 of the second register 29C. In this embodiment of this application, the second register 29C performs a beating operation on a data signal output by the data cache 25C, and then outputs the data signal to the second sub-circuit 30. In addition, when a large quantity of data signals need to be exchanged, the data signal output by the data cache 25C may be first cached to the second register 29C, and then output to the second sub-circuit 30 through the second register 29C.

In some possible implementations, as shown in FIG. 12, a receive interface of a third asynchronous clock interface circuit 20C further includes a first level logic conversion circuit C1. A fourth signal end X4 of a second sub-circuit 30 is coupled to at least one of a plurality of input ends of a clock generation circuit 24C through the first level logic conversion circuit C1. In this embodiment of this application, when a level triggering manner on a side of the second sub-circuit 30 is different from a level triggering manner of the clock generation circuit 24C on a side of the third asynchronous clock interface circuit 20C, the first level logic conversion circuit C1 may perform logical conversion (for example, conversion from an edge-triggered level signal to a level-triggered level signal) on a first handshake feedback signal output by the fourth signal end X4 of the second sub-circuit 30, to adapt to a corresponding triggering manner.

In some possible implementations, as shown in FIG. 12, a send interface of a third asynchronous clock interface circuit 20C further includes at least one of a second level logic conversion circuit C2, a third level logic conversion circuit C3, and a fourth level logic conversion circuit C4. A first signal end X1 of a first sub-circuit 10 is coupled to a trigger input end D1 of a first trigger circuit 23C through the second level logic conversion circuit C2. An output end of a first beat conversion circuit 21C is coupled to a third signal end X3 of the first sub-circuit 10 through the third level logic conversion circuit C3. An output end of a second beat conversion circuit 22C is coupled to a second signal end X2 of a second sub-circuit 30 through the fourth level logic conversion circuit C4. In this embodiment of this application, for related descriptions of the second level logic conversion circuit C2, the third level logic conversion circuit C3, and the fourth level logic conversion circuit C4, refer to related descriptions of the first level logic conversion circuit C1 in the foregoing embodiment.

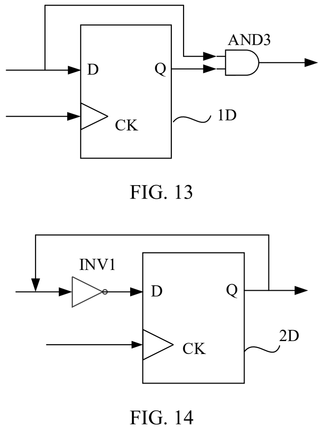

For example, FIG. 13 shows a level logic conversion circuit for converting edge triggering to level triggering. The level logic conversion circuit includes a third AND gate AND3 and a first D flip-flop 1D. A first input end of the third AND gate AND3 and a trigger input end D of the first D flip-flop 1D separately input an edge-triggered control signal on which conversion is not performed. A trigger output end Q of the first D flip-flop 1D is coupled to a second input end of the third AND gate AND3. A clock end CK of the first D flip-flop 1D is configured to input a corresponding clock signal. For example, when the level logic conversion circuit is a first level logic conversion circuit C1 and a fourth level logic conversion circuit C4, the clock end CK of the level logic conversion circuit inputs a second clock signal of a second sub-circuit 30. When the level logic conversion circuit is a second level logic conversion circuit C2 and a third level logic conversion circuit C3, the clock end CK of the level logic conversion circuit inputs a first clock signal of a first sub-circuit 10.

For example, FIG. 14 shows a level logic conversion circuit for converting level triggering to edge triggering. The level logic conversion circuit may include a first inverter INV1 and a second D flip-flop 2D. An input end of the first inverter INV1 separately inputs a control signal on which conversion is not performed and a control signal obtained through conversion. An output end of the first inverter INV1 is coupled to an input end of the second D flip-flop 2D. A clock end CK of the second D flip-flop 2D inputs a corresponding clock signal. For a correspondence between clock signals input into the level logic conversion circuit shown in FIG. 14, refer to related descriptions of a correspondence between clock signals input into the level logic conversion circuit shown in FIG. 13. Details are not described herein again.

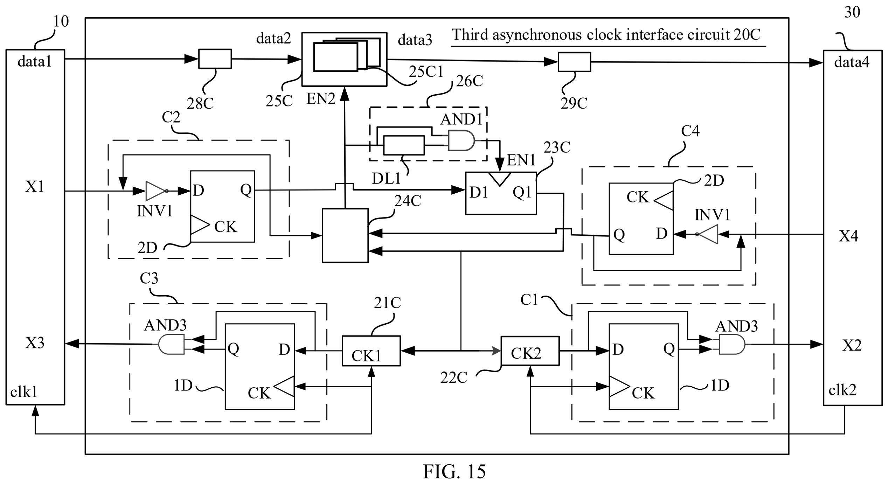

For example, a first sub-circuit 10 and a second sub-circuit 30 are level-triggered, and a third asynchronous clock interface circuit 20C is edge-triggered. As shown in FIG. 15, a first level logic conversion circuit C1 and a second level logic conversion circuit C2 are converted from level-triggered to variable-voltage-triggered, and the level logic conversion circuit shown in FIG. 14 may be used. A third level logic conversion circuit C3 and a fourth level logic conversion circuit C4 are converted from edge-triggered to level-triggered, and the level logic conversion circuit shown in FIG. 13 may be used.

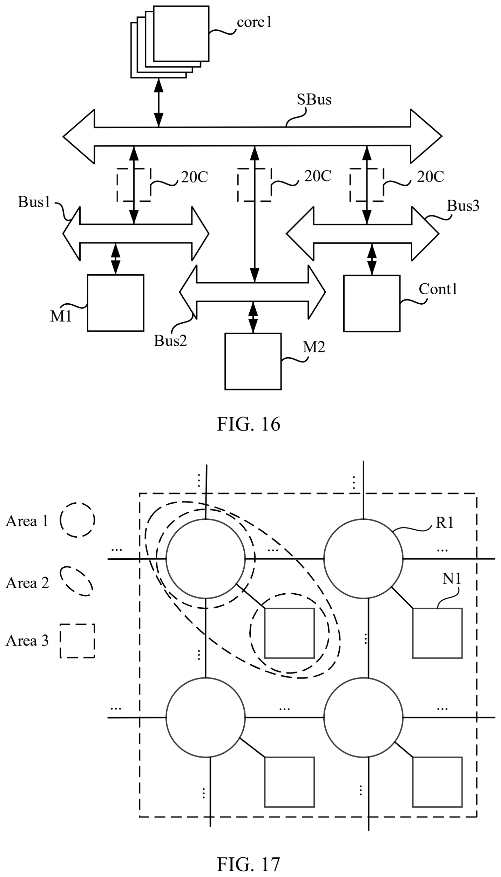

Optionally, the processing chip 100 is a very large scale SoC. As shown in FIG. 16, the SoC includes a plurality of processing cores core1, a system bus SBus, a high speed periphery bus (high speed periphery bus) Bus1, a low speed periphery bus (low speed periphery bus) Bus2, a control bus (control bus) Bus3, a first storage circuit M1, a second storage circuit M2, a control circuit Cont1, and a third asynchronous clock interface circuit 20C. For example, the third asynchronous clock interface circuit 20C may be coupled between the system bus SBus and the high speed periphery bus Bus1. In this case, the first sub-circuit 10 and the second sub-circuit 30 may be respectively the processing core core1 and the first storage circuit M1. For example, the third asynchronous clock interface circuit 20C may be coupled between the system bus SBus and the low speed periphery bus Bus2. In this case, the first sub-circuit 10 and the second sub-circuit 30 may be respectively the processing core core1 and the second storage circuit M2. For example, the third asynchronous clock interface circuit 20C may be coupled between the system bus SBus and the control bus Bus3. In this case, the first sub-circuit 10 and the second sub-circuit 30 may be respectively the processing core core1 and the control circuit Cont1. In this embodiment of this application, the system bus SBus is coupled to another bus through the third asynchronous clock interface circuit 20C. An asynchronous circuit may be disposed between the system bus SBus of the SoC and the another bus. This avoids a problem that a synchronization clock signal is delayed due to an excessively long signal line as an integration area or the like of the SoC in a synchronous integrated circuit increases, and avoids problems such as a SoC design placement difficulty, a communication exchange conflict, an increase in communication power consumption, poor scalability, reduced communication reliability, and a reduced throughput in a case of a very large scale. A scale of the SoC in the asynchronous clock integrated circuit can be more easily expanded through the third asynchronous clock interface circuit 20C.

Optionally, the processing chip 100 is a NoC. For example, FIG. 17 is a diagram of a structure of a NoC of a two-dimensional mesh (2D-mesh) structure. The NoC includes a plurality of routing nodes R1 and a plurality of processing nodes N1. The plurality of routing nodes R1 are connected to form an array structure, and each routing node R1 is coupled to one processing node N1. Asynchronous exchange of a data signal and asynchronous exchange of a control signal are implemented between the plurality of processing nodes N1 via the corresponding routing nodes R1. Optionally, the NoC may be divided into three sub-areas of different specification types, and a third asynchronous clock interface circuit 20C may be disposed in each of the three sub-areas of the different specification types. The three sub-areas of different rule types are respectively: a sub-area 1 formed by a single routing node R1 or a single processing node N1, a sub-area 2 including a pair of interconnected routing node R1 and processing node N1, and a sub-area 3 including a plurality of pairs of interconnected routing nodes R1 and processing nodes N1. For example, for a plurality of sub-areas 1, asynchronous exchange may be implemented between a sub-area 1 of the routing node R1 and a sub-area 1 of the processing node N1 through one third asynchronous clock interface circuit 20C. For example, for two adjacent sub-areas 2, routing nodes R1 in the two sub-areas 2 may be interconnected through one third asynchronous clock interface circuit 20C, to implement direct asynchronous exchange between the two sub-areas 2. For example, for two adjacent sub-areas 3, adjacent routing nodes R1 in the two sub-areas 3 may be interconnected through at least one third asynchronous clock interface circuit 20C, to implement asynchronous exchange between the two sub-areas 3.

In some possible implementations, the processing chip 100 further includes a fourth asynchronous clock interface circuit. The second sub-circuit 30 is coupled to the first sub-circuit 10 through the fourth asynchronous clock circuit. The second sub-circuit 30 may perform data signal exchange and control signal exchange with the first sub-circuit 10 through the fourth asynchronous clock circuit. In this embodiment of this application, for technical principles and beneficial effects of the signal exchange between the second sub-circuit 30 and the first sub-circuit 10 through the fourth asynchronous clock circuit, refer to related descriptions of the third asynchronous clock circuit 20C in the foregoing embodiment. Details are not described herein again.

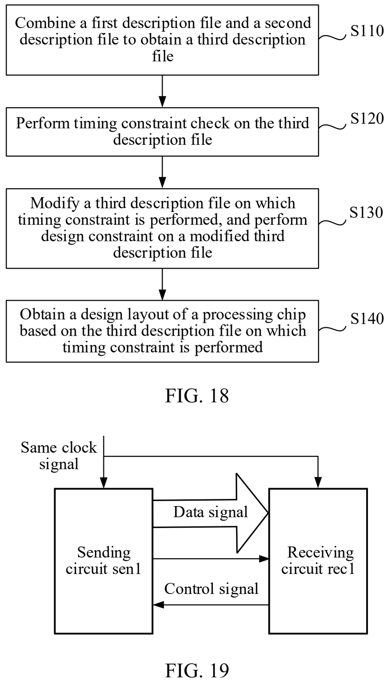

Embodiments of this application further provide a design method. According to the design method, a processing chip including structures shown in FIG. 6, FIG. 7, FIG. 8, FIG. 9, FIG. 10, FIG. 11, FIG. 12, FIG. 13, FIG. 14, FIG. 15, FIG. 16, and FIG. 17 is designed based on an existing EDA design tool. As shown in FIG. 18, the design method specifically includes the following content recorded in step S110 to step S140.

S110: Combine a first description file and a second description file to obtain a third description file.

The first description file is used for describing a logical function of a first chip. The first chip includes a plurality of sub-circuits. The second description file is used for describing a logical function of an asynchronous clock interface circuit. The third description file is used for describing a logical function of the processing chip, and the second description file is used for describing a logical function of the third asynchronous clock interface circuit 20C. The third description file is used for describing a logical function of the processing chip 100.

In this embodiment of this application, the first description file related to the first chip has been generated in the existing EDA design tool. Both the first description file and the second description file are RTL description files. The first description file is an original description file that is in the existing EDA design tool and that is used for describing the logical function of the first chip. The second description file is an RTL description file obtained after the logical function of the third asynchronous clock interface circuit 20C is integrated into an IP core. In actual application, the third asynchronous clock interface circuit 20C used for an asynchronous clock integrated circuit is integrated into a basic IP core. In a subsequent design, a corresponding second description file and a corresponding first description file may be directly invoked for combination, to design the asynchronous clock integrated circuit.

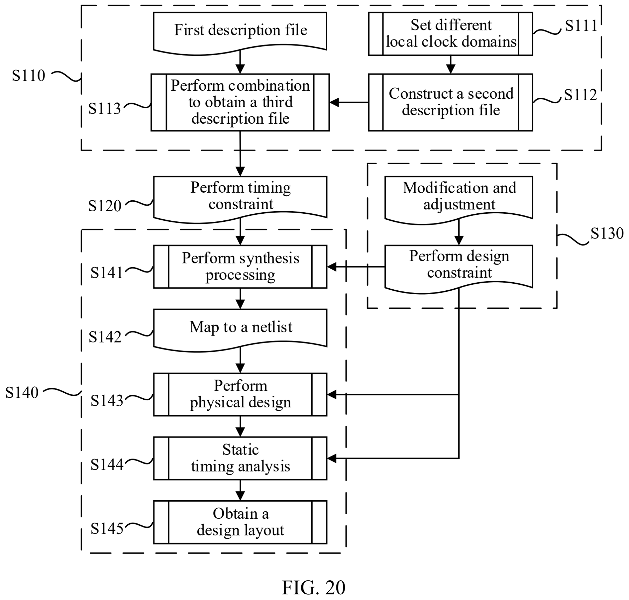

In some possible implementations, when the plurality of sub-circuits in the first chip are based on a same clock domain, the plurality of sub-circuits in the first chip receive a same clock signal. As shown in FIG. 19, an example in which the plurality of sub-circuits in the first chip include a sending circuit sen1 and a receiving circuit rec1 is used. In this case, the sending circuit sen1 and the receiving circuit rec1 are based on a same clock signal. Step S110 may include the following operations of step S111 to step S113 shown in FIG. 20.

S111: Set the sending circuit sen1 and the receiving circuit rec1 that are described in the first description file to different local clock domains, to obtain a first sub-circuit 10 and a second sub-circuit 30.

S112: Construct the second description file.

In this embodiment of this application, when the first description file is an RTL description file related to a synchronous integrated circuit, the synchronous integrated circuit does not include the logical function of the third asynchronous clock interface circuit 20C applied to the asynchronous exchange. In this case, the logical function of the third asynchronous clock interface circuit 20C needs to be first designed, and the corresponding second description file is generated. Specific operations are as follows.

First, logical functions of circuits in a sending interface and a receiving interface are generated, for example, logical functions of a first beat conversion circuit 21C and a second beat conversion circuit 22C. Optionally, based on an actual application scenario, a logical function of at least one of the first level logic conversion circuit C1, the second level logic conversion circuit C2, the third level logic conversion circuit C3, and the fourth level logic conversion circuit C4 shown in FIG. 12 may be further generated.

Second, a logical function of a circuit in an asynchronous conversion circuit is generated, for example, a logical function of a first trigger circuit 23C. Optionally, logical functions of circuits such as a data cache 25C, a clock generation circuit 24C, a pulse width delay circuit 26C, and a voltage keeping circuit 27C may be further generated.

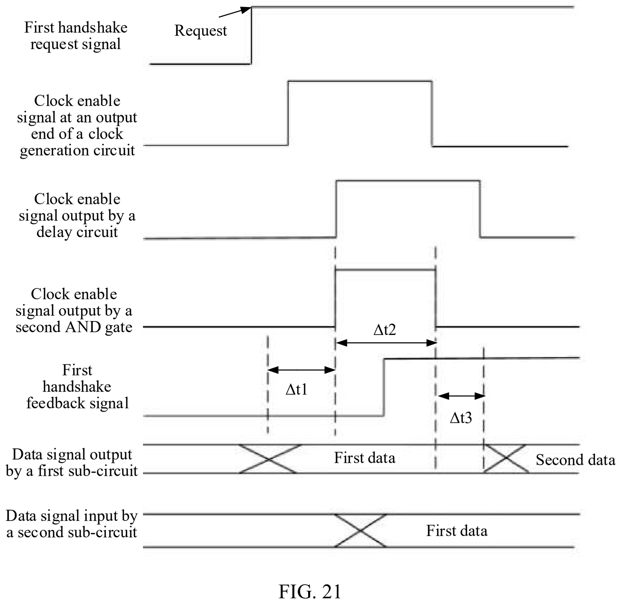

Then, a timing unit library of the third asynchronous clock interface circuit 20C is constructed, and timing constraint is performed on the logical function of the generated third asynchronous clock interface circuit 20C. For example, as shown in FIG. 21, a protocol mechanism of a handshake signal is used for exchange and transmission of a control signal of the third asynchronous clock interface circuit 20C. In the figure, Δt1 is trigger time of a clock enable signal for the data cache 25C. Δt2 is preparation time for the clock enable signal to drive the data cache 25C to perform transmission of a data signal. Δt3 is hold time after the clock enable signal drives the data cache 25C. In a scenario in which transmission of a single-bit data signal needs to be performed, due to a mutually exclusive structure of the circuit, duration Δt2 needs to be not less than a minimum active level constraint of the data cache 25C, and there is a requirement of a specified timing between a first handshake request signal and a clock enable signal obtained through a pulse width delay. Because both the clock enable signal obtained through the pulse width delay and the first handshake request signal are generated through a multi-stage gate circuit, the timing requirement is easily satisfied. In a scenario in which transmission of a data signal of a plurality of bits needs to be performed, the data signal needs to be bound to a first handshake request signal. It is required that Δt2 be not less than a minimum active level constraint of the data cache 25C, and Δt1 further needs to be greater than setup time of the data cache 25C. The third asynchronous clock interface circuit 20C is customized into a standard unit by using these constraint conditions, and a key signal timing characteristic is extracted.

S113: Combine the first description file and the second description file to obtain the third description file.

For example, the second description file is inserted, by using an auto insertion (auto insertion), at an interface location specified in the first description file, an original transmission path related to the sending circuit sen1 and the receiving circuit rec1 in the original first description file is interrupted, and a new transmission path of the first sub-circuit 10 and the second sub-circuit 30 is generated by using the second description file, to generate the third description file.

When the first description file is the RTL description file used for describing the synchronous integrated circuit, the third description file may be obtained based on the operations of step S111 to step S113.

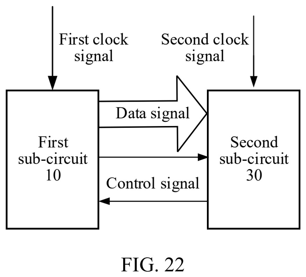

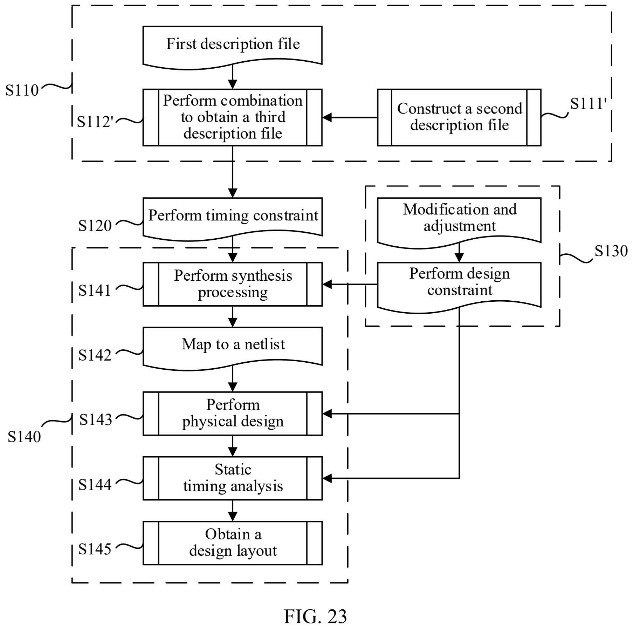

In some possible implementations, when some or all sub-circuits in the first chip are based on different clock domains, the first description file is an RTL description file related to the asynchronous clock integrated circuit. In this case, as shown in FIG. 22, the first chip of the asynchronous clock integrated circuit already includes a first sub-circuit 10 and a second sub-circuit 30 that are based on the different clock domains. Step S110 may include the following operations of step S111' and step S112' shown in FIG. 23.

S111': Construct the second description file.

In some possible implementations, in first description files in some existing EDA design tools, there is a description language for the related logical functions of the first beat conversion circuit 21C and the second beat conversion circuit 22C. In this case, only designs of logical functions of related circuits such as the first trigger circuit 23C, the data cache 25C, the clock generation circuit 24C, the pulse width delay circuit 26C, and the voltage keeping circuit 27C need to be designed, to generate the second description file. For descriptions of the designs of the logical functions of the related circuits such as the first trigger circuit 23C, the data cache 25C, the clock generation circuit 24C, the pulse width delay circuit 26C, and the voltage keeping circuit 27C, refer to related descriptions in the embodiment of step S112. Details are not described herein again.

S112': Combine the first description file and the second description file to obtain the third description file.

For related descriptions of step S112', refer to related descriptions in the embodiment of step S113. Details are not described herein again.

S120: Perform timing constraint (timing constraint) check on the third description file.

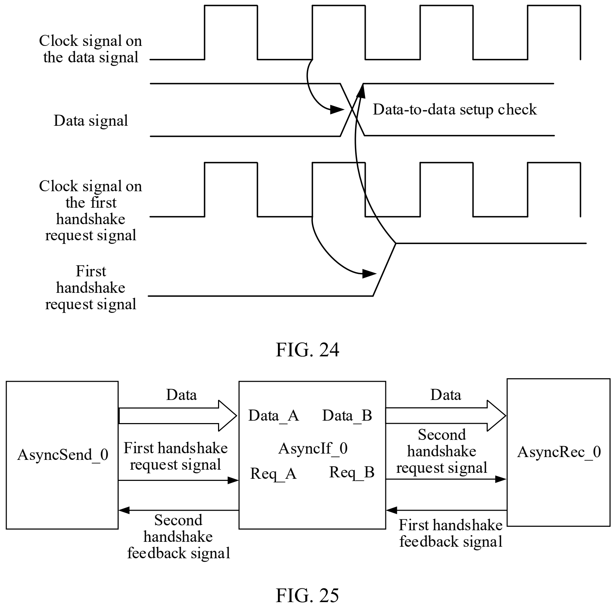

In this embodiment of this application, the data signal is bound to the first handshake request signal, and a delay between the data signal and the first handshake request signal is required to satisfy setup time of the asynchronous interface. The third asynchronous clock interface circuit 20C obtained in step S110 needs to satisfy the following constraints:
Constraint 1: Based on an actual application scenario, a specific timing relationship requirement is set for the first handshake request signal, a second handshake request signal, a first handshake feedback signal, and a second handshake feedback signal, and it needs to be ensured that the delay between the data signal and the first handshake request signal should satisfy setup time of the third asynchronous clock interface circuit 20C. In an actual application scenario, a first clock signal or a second clock signal may be separately used as a reference to check and set a constraint for timing constraint check. As shown in FIG. 24 and FIG. 25, a first handshake request signal and a data signal from a transmitting end to an input end of a third asynchronous clock interface circuit 20C are output from a register in a same clock domain, and a second handshake request signal and the data signal from the input end of the third asynchronous clock interface circuit 20C to a receiving end enter a register in the same clock domain for input. Therefore, data-to-data setup check (data-to-data setup check) or data-to-data hold check (data-to-data hold check) may be performed, to ensure that no error occurs in data transmission when the handshake request signal and the data signal enter the third asynchronous clock interface circuit 20C across different clock domains. As shown in FIG. 25, AsyncIf_0 corresponds to a third asynchronous clock interface circuit 20C, AsyncSend_0 corresponds to a first sub-circuit 10, and AsyncRec_0 corresponds to a second sub-circuit 30. A specific command format on an EDA design tool may be:
Command 1: set_data_check -from xxx/AsyncIf_0/X1 -to xxx/AsyncIf_0/Data_A -setup value - hold value; or
Command 1: set_data_check -from xxx/AsyncRec_0/X2 -to xxx/AsynRec_0/Data_B -setup value -hold value.

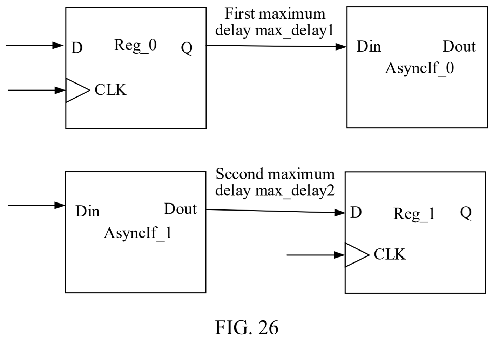

Constraint 2: Timings of two ends of the third asynchronous clock interface circuit 20C (to be specific, from an output of the first sub-circuit 10 of the transmitting end to an input of the third asynchronous clock interface circuit 20C, and from an output of the third asynchronous clock interface circuit 20C to an input of the second sub-circuit 30) need to be optimized to a shortest delay, and this avoids performance loss caused by an excessively long trace delay. As shown in FIG. 26, a first maximum delay max delay1 from a first sub-circuit 10 to a third asynchronous clock interface circuit 20C, and a second maximum delay max delay2 from the third asynchronous clock interface circuit 20C to a second sub-circuit 30 are set. That is, maximum values of data transmission delays at two ends of the third asynchronous clock interface circuit 20C are set, so that highest performance of the data transmission is ensured. In FIG. 26, max_delay1 is the first maximum delay. max_delay2 is the second maximum delay. Reg_0 represents a register that outputs a data signal in the first sub-circuit 10. AsyncIf_0 is the third asynchronous clock interface circuit 20C coupled to the first sub-circuit 10. Reg_1 represents a register that receives the data signal in the second sub-circuit 30. AsyncIf_1 is the third asynchronous clock interface circuit 20C coupled to the second sub-circuit 30. A specific command format on an EDA design tool may be:
Command 1: set_max_delay -datapath_only -from xxx/Reg 0/Q -to xxx/AsyncIf_0/Din delay_value; or
Command 2: set_max_delay -datapath _only -from yyy/AsyncIf_1/Dout -to yyy/Reg_1/D delay_value.

S130: Modify a third description file on which timing constraint is performed, and perform design constraint (design constraint) on a modified third description file.

In this embodiment of this application, the third description file in step S110 may be modified. Alternatively, a path that does not satisfy the timing constraint check requirement in step S120 may be repaired. In a repair process, a buffer (buffer) may be inserted into a path corresponding to a violation (violation) in which the timing constraint is violated, to perform timing adjustment, and operations of step S120 and step S130 are iterated until all timing paths satisfy a check condition of the timing constraint. In this way, the final third description file on which the timing constraint is performed is obtained.

S140: Obtain a design layout of the processing chip 100 based on the third description file on which timing constraint is performed.

In this embodiment of this application, after the determined third description file is obtained, a logic circuit structure is designed based on the third description file, to obtain the design layout, and the processing chip 100 is manufactured in a subsequent process based on the design layout. In some possible implementations, step S140 includes the following operations of step S141 to step S145 shown in FIG. 20 and FIG. 23.

S141: Perform logic gate circuit synthesis (synthesis) processing on the third description file on which timing constraint is performed, to obtain a composition structure of a logic circuit.

In this embodiment of this application, a corresponding logical function in the third description file corresponds to a logic gate circuit, to obtain the corresponding logic gate circuit structure through synthesis.

Step S142: Map the logic gate circuit structure obtained through synthesis to obtain a corresponding netlist (netlist).

Step S143: Perform physical design (physical design) placement based on the mapped netlist. Step S144: Perform static timing analysis (static timing analysis, STA) on a circuit structure obtained through the physical design.

Step S145: Obtain the final design layout of the processing chip 100 after the static timing analysis is completed.

In this embodiment of this application, after the design layout is obtained, in a subsequent process, a corresponding mask and the like may be obtained based on the design layout, to perform manufacturing and processing of the processing chip 100.

In this embodiment of this application, based on the foregoing design method including step S110 to step S140, the processing chip 100 including the third asynchronous clock interface circuit 20C may be quickly designed based on the existing EDA design tool. In comparison with a complete design manner based on an STG design, a physical design tool, and an asynchronous EDA design tool, the design method in this embodiment of this application can quickly, efficiently, and reliably complete a design of a very-large-scale asynchronous clock integrated circuit.

Embodiments of this application provide a processing chip, a design method, and an electronic device. The processing chip includes a first sub-circuit, a third asynchronous clock interface circuit, and a second sub-circuit. The third asynchronous clock interface circuit includes a first beat conversion circuit, a second beat conversion circuit, and a first trigger circuit. That the first sub-circuit performs asynchronous exchange of a control signal with the second sub-circuit through the third asynchronous clock interface circuit is specifically: The first sub-circuit sends a first handshake request signal to the first trigger circuit; and after receiving the first handshake request signal, the first trigger circuit is triggered to output a second handshake request signal, and separately outputs the second handshake request signal to the first beat conversion circuit and the second beat conversion circuit. Then, the first beat conversion circuit beats the second handshake request signal for a plurality of beats, converses the second handshake request signal to a second handshake feedback signal that is in a same clock domain as the first sub-circuit, and outputs the second handshake feedback signal to the first sub-circuit. The second beat conversion circuit beats the received second handshake request signal for a plurality of beats, converses the received second handshake request signal to a second handshake request signal that is in a same clock domain as the second sub-circuit, and outputs the second handshake request signal to the second sub-circuit. In this embodiment of this application, a determined timing may be obtained by setting corresponding beats and the like for the first beat conversion circuit and the second beat conversion circuit. In this case, the first trigger circuit outputs the signal to the first beat conversion circuit and the second beat conversion circuit simultaneously, and the first beat conversion circuit and the second beat conversion circuit simultaneously perform beating. In comparison with an implementation in which two beat conversion circuits separately perform beating, in this embodiment of this application, a delay caused by beating performed by the beat conversion circuit can be reduced, and in a circuit in which more times of beating are performed, a delay that can be reduced is larger.

The processor in embodiments of this application may be a chip. For example, the processor may be a field programmable gate array (field programmable gate array, FPGA), a dedicated integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments, and details are not described herein again.

In several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate components may or may not be physically separate, and components displayed as modules may or may not be physical modules, may be located in one device, or may be distributed on a plurality of devices. Some or all the modules may be selected according to actual needs to achieve the objectives of the solutions of embodiments.

In addition, function modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A processing chip, comprising a first sub-circuit, an asynchronous clock interface circuit, and a second sub-circuit, wherein the asynchronous clock interface circuit comprises a first beat conversion circuit, a first trigger circuit, and a second beat conversion circuit;
a first signal end of the first sub-circuit is coupled to a trigger input end of the first trigger circuit; a trigger output end of the first trigger circuit is separately coupled to an input end of the first beat conversion circuit and an input end of the second beat conversion circuit; an output end of the first beat conversion circuit is coupled to a third signal end of the first sub-circuit; and an output end of the second beat conversion circuit is coupled to a second signal end of the second sub-circuit; and
a first clock output end of the first sub-circuit is coupled to a first clock end of the first beat conversion circuit; and a second clock output end of the second sub-circuit is coupled to a second clock end of the second beat conversion circuit.

2. The processing chip according to claim 1, wherein the asynchronous clock interface circuit further comprises a clock generation circuit; and
a plurality of input ends of the clock generation circuit are respectively coupled to the first signal end of the first sub-circuit, the trigger output end of the first trigger circuit, and a fourth signal end of the second sub-circuit; and an output end of the clock generation circuit is coupled to a first enable end of the first trigger circuit.

3. The processing chip according to claim 2, wherein the asynchronous clock interface circuit further comprises a data cache;
a first data output end of the first sub-circuit is coupled to a first data input end of the data cache; and a second data output end of the data cache is coupled to a second data input end of the second sub-circuit; and
the output end of the clock generation circuit is further coupled to a second enable end of the data cache and the first enable end of the first trigger circuit.

4. The processing chip according to claim 3, wherein the asynchronous clock interface circuit further comprises a first register and a second register;
the first data output end of the first sub-circuit is coupled to an input end of the first register; an output end of the first register is coupled to the first data input end of the data cache; and the clock output end of the first sub-circuit is further coupled to a third clock end of the first register; and
an input end of the second register is coupled to the second data output end of the data cache; an output end of the second register is coupled to the second data input end of the second sub-circuit; and the clock output end of the second sub-circuit is further coupled to a fourth clock end of the second register.

5. The processing chip according to claim 3 or 4, wherein the asynchronous clock interface circuit further comprises a voltage keeping circuit; and the output end of the clock generation circuit is coupled to the second enable end of the data cache through the voltage keeping circuit.

6. The processing chip according to any one of claims 2 to 5, wherein the asynchronous clock interface circuit further comprises a pulse width delay circuit; and the output end of the clock generation circuit is coupled to the first enable end of the first trigger circuit through the pulse width delay circuit.

7. The processing chip according to claim 6, wherein the pulse width delay circuit comprises a delay circuit and a first AND gate; the output end of the clock generation circuit is coupled to a first input end of the first AND gate; and the output end of the clock generation circuit is further coupled to a second input end of the first AND gate through the delay circuit.

8. The processing chip according to any one of claims 2 to 7, wherein the clock generation circuit comprises an XOR gate, an XNOR gate, and a second AND gate; and the plurality of input ends of the clock generation circuit comprise a first input end of the XOR gate, a second input end of the XOR gate, a first input end of the XNOR gate, and a second input end of the XNOR gate;
the first input end of the XOR gate is coupled to the first signal end of the first sub-circuit; and the second input end of the XOR gate is coupled to the trigger output end of the first trigger circuit;
the first input end of the XNOR gate is coupled to the fourth signal end of the second sub-circuit; and the second input end of the XNOR gate is coupled to the trigger output end of the first trigger circuit; and
an output end of the XOR gate is coupled to a first input end of the second AND gate; an output end of the XNOR gate is coupled to a second input end of the second AND gate; and an output end of the second AND gate is the output end of the clock generation circuit.

9. The processing chip according to any one of claims 2 to 8, wherein the asynchronous clock interface circuit further comprises a first level logic conversion circuit; and the fourth signal end of the second sub-circuit is coupled to at least one of the plurality of input ends of the clock generation circuit through the first level logic conversion circuit.

10. The processing chip according to any one of claims 1 to 9, wherein the asynchronous clock interface circuit further comprises at least one of a second level logic conversion circuit, a third level logic conversion circuit, and a fourth level logic conversion circuit;
the first signal end of the first sub-circuit is coupled to the trigger input end of the first trigger circuit through the second level logic conversion circuit;
the output end of the first beat conversion circuit is coupled to the third signal end of the first sub-circuit through the third level logic conversion circuit; and
the output end of the second beat conversion circuit is coupled to the second signal end of the second sub-circuit through the fourth level logic conversion circuit.

11. The processing chip according to any one of claims 1 to 10, wherein the first sub-circuit and/or the second sub-circuit are/is any one of a storage circuit, a logic control circuit, a routing interface circuit, and a neural network processing circuit.

12. A design method, used for designing the processing chip according to any one of claims 1 to 11, wherein the design method comprises:
combining a first description file and a second description file to obtain a third description file, wherein the first description file is used for describing a logical function of a first chip; the first chip comprises a plurality of sub-circuits; the plurality of sub-circuits are based on a same clock domain, or some or all of the plurality of sub-circuits are based on different clock domains; the second description file is used for describing a logical function of the asynchronous clock interface circuit; and the third description file is used for describing a logical function of the processing chip;
performing timing constraint on the third description file; and
obtaining a logic circuit structure of the processing chip based on the third description file on which timing constraint is performed.

13. The design method according to claim 12, wherein the design method further comprises:
before the obtaining a logic circuit structure of the processing chip based on the third description file on which timing constraint is performed, modifying the third description file on which timing constraint is performed, and performing design constraint on the modified third description file.

14. An electronic device, comprising a circuit board and the processing chip according to any one of claims 1 to 11, wherein the processing chip is disposed on the circuit board.
